# FASCICULE DE BREVET EUROPEEN

(11) **EP 1 044 752 B1**
(45) Date de publication et mention de la délivrance du brevet: **24.11.2004**
(21) Numéro de dépôt: 00400699.5
(22) Date de dépôt: 14.03.2000
(51) Int. Cl.: B23K 9/173

(54) **Procédé de soudage MIG de l'aluminium et de ses alliages à régime pulsé**
Verfahren zum pulsförmigen MIG-Schweissen von Al-Legierungen
Pulsed MIG welding method of Al alloys

(30) Priorité: 15.04.1999 FR 9904728
(43) Date de publication de la demande: 18.10.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Fortain, Jean-Marie, 95520 Osny (FR); Lefebvre, Philippe, 95310 Saint-Ouen l'Aumone (FR); Plottier, Gérard, 93380 Pierrefitte (FR)
(74) Mandataire: Pittis, Olivier

(56) Documents cités:
- EP-A- 0 442 475
- EP-A- 0 722 804
- US-A- 3 143 631
- US-A- 4 071 732

## Description

La présente invention porte sur un procédé MIG (Metal Inert Gas) de soudage à l'arc électrique de l'aluminium et des alliages d'aluminium, à régime pulsé conformément au préambule de la revendication 1 (voir, par example, EP-A-0 722 804).

Le procédé de soudage à l'arc électrique utilisant un fil fusible en tant qu'électrode et un gaz inerte de protection de la zone soudée est bien connu et largement utilisé dans l'industrie. Habituellement, il est appelé procédé de soudage MIG.

Lors de la fusion du fil fusible, c'est-à-dire de l'électrode, le transfert du métal fondu peut être réalisé selon plusieurs régimes. Ainsi, on peut citer les régimes :
- dit par "court-circuit", dans lequel une goutte de métal fondu se forme, sous faible énergie d'arc, à l'extrémité du fil fusible, puis grossit et vient ensuite en contact avec le bain de fusion et se détache du fil.
- dit "spray", dans lequel le transfert de métal du fil au bain de métal en fusion se fait, sous énergie et densité de courant importantes, à vitesse élevée, sous forme de fines gouttelettes de diamètre inférieur à celui du fil et dans l'axe dudit fil. Il est caractérisé par un arc très stable et sans projection de métal.
- dit "pulsé", dans lequel on superpose des pulsations de courant à un courant de base destiné à maintenir l'arc, de manière à envoyer une goutte de métal fondu par pulsation de courant. Ce régime est comparable au régime spray (à pulvérisation axiale), mais avec mise en oeuvre d'un courant moyen inférieur.

Pour suivre les évolutions technologiques de l'industrie, tels que celles du secteur des transports (ferroviaire, naval, automobile, aéronautique ou spatial) ou du secteur de l'énergie et du stockage, le procédé MIG a dû s'adapter.

Tout d'abord, on a constaté une évolution significative des sources de courants (électronique de puissance à pilotage par microprocesseur), puis il a été opéré un choix plus rationnel des gaz de soudage, lequel a permis de répondre de manière plus concrète aux attentes de l'industrie, en particulier en termes de productivité et de qualité du soudage.

Ainsi, il a été montré que l'argon conduit, tant en soudage automatique que manuel, à un bon transfert de métal dans l'arc et un bel aspect brillant des soudures ainsi réalisées.

Par exemple, le document EP-A-722804 enseigne un procédé de soudage MIG avec fil d'apport fusible à régime pulsé non-modulé de l'aluminium avec argon pur en tant que gaz de protection permettant d'atteindre une vitesse de soudage de 2 à 7 m/min.

Par contre, l'argon n'autorise pas de vitesses de soudage élevées et peut occasionner, en soudage automatique, des instabilités d'arc au-delà de 500 A.

De plus, la forme caractéristique étroite des pénétrations obtenues sous argon s'accommode mal d'un soudage par interpénétration.

Dans les mélanges d'argon et d'hélium (ci-après Ar/He), l'hélium permet d'augmenter la profondeur de pénétration et sa largeur en racine donc peut permettre de s'affranchir de préparations coûteuses et ce, de façon d'autant plus marquée que la teneur en hélium est élevée.

En d'autres termes, à épaisseur constante, il autorise donc des vitesses de soudage d'autant plus élevées que sa teneur est importante.

Généralement, la compacité des cordons s'en trouve également améliorée mais au détriment de l'aspect des cordons qui sont moins brillants que sous argon pur.

Les mélanges Ar/He présentent donc un intérêt évident en terme de qualité et de productivité tant en soudage manuel (Ar + 20% He) qu'en soudage automatique (Ar + 50% à 70% He), en regard, toutefois, d'un coût non négligeable lié à la teneur en hélium.

Pour des applications n'imposant pas forcément de satisfaire ces deux critères, il peut être judicieux de s'intéresser à d'autres types de mélanges.

Ainsi, le document EP-A-639423 propose pour les procédés TIG et MIG d'utiliser un gaz de soudage de type argon ou argon/hélium contenant, en outre, de 100 à 1000 ppmv de CO₂ et/ou de O₂.

Par ailleurs, le document US-A-3,143,631 enseigne un procédé de soudage MIG utilisant un gaz de protection formé d'argon pour ressentiel et d'oxygène en faible proportion, qui est recommandé pour le soudage des métaux ferreux, en particulier les aciers, mais qui peut être appliqué au soudage des métaux non-ferreux, notamment de l'aluminium. Un exemple unique concernant l'Aluminium est décrit, pour lequel le mélange de gaz contient 1 % d'oxygène.

En outre, le document DE-A-4241982 propose, quant à lui, d'utiliser de l'argon ou un mélange argon/hélium additionné, en outre, de 80 à 250 ppmv d'azote.

Toutefois, aucun de ces procédés connus n'est pleinement satisfaisant du point de vue industriel.

En outre, en soudage MIG spray modulé, c'est-à-dire avec mise en oeuvre d'une modulation du courant de soudage, il a déjà été préconisé d'utiliser un gaz ou un mélange gazeux de protection formé d'argon, d'hélium ou leurs mélanges, additionné de 0,01% à 1,80% de dioxyde de carbone et/ou d'oxygène, ainsi que décrit dans EP-A-909604.

Toutefois, dans ce cas, des modulations de courant à une fréquence de moins de 60 Hz sont appliquées au courant, de manière à pouvoir dégazer le bain de soudure pour en éliminer les inclusions gazeuses, en particulier l'hydrogène diffusible, susceptibles de s'y trouver.

En effet, les procédés MIG à régime spray avec modulations du courant sont mis en oeuvre lorsqu'on souhaite obtenir une qualité élevée du joint de soudure, mais sans nécessité réelle d'atteindre une vitesse de soudage importante.

Dès lors, le problème qui se pose est d'améliorer les procédés de soudage MIG connus ne mettant pas en oeuvre de modulations du courant de soudage, en particulier ceux à régime pulsé, pour obtenir des performances élevées en termes de productivité et de vitesse de soudage.

Pour ce faire, les procédés MIG à régime pulsé sont beaucoup plus adaptés lorsqu'on souhaite améliorer la productivité plutôt que la qualité, c'est-à-dire l'aspect, des soudures ainsi réalisées.

Cependant, jusqu'à présent les procédés MIG à régime pulsé ne sont pas ou peu utilisés pour le soudage de l'aluminium ou de ses alliages, lorsque la protection gazeuse contient de l'oxygène.

En effet, il est habituellement reconnu que la présence d'oxygène dans la protection gazeuse peut avoir un impact néfaste sur la soudure étant donné que, lorsque de l'oxygène est incorporé dans la protection gazeuse, celui-ci peut se combiner facilement aux atomes d'aluminium et il en résulte des inclusions solides d'alumine (Al₂O₃) dans la soudure, lesquelles ont un impact négatif sur les qualités mécaniques de ladite soudure. Ceci a d'ailleurs été vérifié pour des teneurs importantes en oxygène, c'est-à-dire des teneurs supérieures à 2% d'oxygène, ainsi que pour des teneurs importantes en dioxyde de carbone, c'est-à-dire, là encore, des teneurs supérieures à 2%.

Cependant, à l'inverse, la présence d'oxygène dans le flux gazeux de protection conduit à des performances de productivité acceptables.

Il s'ensuit alors que le problème qui se pose est de proposer un procédé de soudage MIG de l'aluminium et de ses alliages permettant d'aboutir à la fois à une productivité élevée et acceptable industriellement, et à un taux faible d'inclusions d'alumine dans la soudure sans incidence majeure ou notable sur les caractéristiques mécaniques des joints soudés.

La solution apportée par la présente invention repose alors sur un procédé de soudage MIG à régime conformément à la revendication 1.

D'autres caractéristiques du procédé de l'invention sont données ci-après :
- le mélange gazeux ou protection contient de 1,2 à 1,65% d'oxygène, le reste étant de l'argon, de préférence de l'ordre de 1.50% d'oxygène.
- on met en oeuvre un fil fusible plein ou un fil fourré.
- la vitesse de soudage est de 0.60 à 1 m/min.
- la vitesse de fil est de 4 m/min à 13 m/min.
- l'intensité moyenne de soudage est de 40 A à 450 A.
- la tension moyenne de soudage est de 15 V à 40 V.
- l'intensité de soudage est de 120 A à 350 A.
- la tension moyenne de soudage est de 20 V à 28 V.

La présente invention repose donc sur un contrôle précis de la teneur en oxygène dans l'argon ; le mélange gazeux ainsi formé constituant la protection gazeuse utilisée lors de la mise en oeuvre du procédé MIG à régime pulsé.

L'invention va maintenant être mieux comprise grâce aux exemples ci-après, donnés à titre illustratif mais non limitatif, dont les résultats sont schématisés sur les figures ci-annexées.

### Exemples

Afin de montrer l'efficacité du procédé MIG pulsé selon l'invention, plusieurs essais comparatifs ont été réalisés.

Dans le cadre de ces essais, des pièces d'aluminium (nuances 5000, et 6000 suivant les normes NFEN 485, 487, 515 et 573) ont été soudées selon un procédé MIG à régime spray non module, à titre comparatif, et à régime pulsé selon l' invention, en utilisant une protection gazeuse constituée d'argon additionné de 1 à 3% de O₂ ou, selon le cas, de 1 à 3% de CO₂.

Le générateur de courant est un générateur 480 TRS commercialisé par la société LA SOUDURE AUTOGENE FRANCAISE.

Le fil fusible en tant que métal d'apport mis en oeuvre est, dans tous les cas, un fil de 1,2 mm de diamètre de type 5356 (suivant les normes AWS A5.10 ou NF A50.403).

Les pièces d'aluminium sont, préalablement au soudage, préparées par grattage mécanique.

Les autres paramètres de soudage sont donnés dans le tableau I ci-après, dans lequel:
- Vfil : représente la vitesse d'avance du fil fusible
- Ic : représente l'intensité du courant de crête
- Ibase : représente l'intensité de base
- Imoy : représente l'intensité moyenne
- Uc : représente la tension de crête
- Umoy : représente la tension moyenne
- Fp : représente la fréquence de pulsation de courant (en MIG à régime pulsé)
- Tp : représente le temps de pulsation de courant (en MIG à régime pulsé)

**Tableau I :**

| **Paramètres de soudage** | | | | |
|---|---|---|---|---|
| **Régime** | **Spray** | **Pulsé** | **Spray** | **Pulsé** |
| Nuance de la pièce d'aluminium | 5000 | 5000 | 6000 | 6000 |
| Epaisseur (mm) | 6 | 6 | 6 | 6 |
| Vfil (m/mn) | 12.5 | 9 | 12.5 | 10.1 |
| Ic (A) | - | 330 | - | 330 |
| Ibase (A) | - | 110 | - | 110 |
| Imoy (A) | 210-230 | 156-180 | 210-230 | 156-180 |
| Uc (V) | - | 28 | - | 29 |
| Umoy (V) | 22-25 | 20-25 | 22-25 | 20-25 |
| Fp (Hz) | - | 155 | - | 155 |
| Tp (ms) | - | 1.6 | - | 1.6 |

Les résultats obtenus sont donnés ci-après, après évaluation des performances en termes de productivité (vitesse de soudage) et de qualité de joint (compacité et aspect du cordon) et des performances mécaniques.

Dans les tableaux II et III, les augmentations de vitesse données dans les 3 nuances d'aluminium ont été déterminées par rapport aux vitesses de soudage classiquement obtenues sous argon (sans addition de O₂ ou CO₂).

Les zones ombrées correspondent à des additions à proscrire, pour lesquelles les propriétés mécaniques des assemblages (résistance à la traction et ou pliages) ne sont pas satisfaisantes.

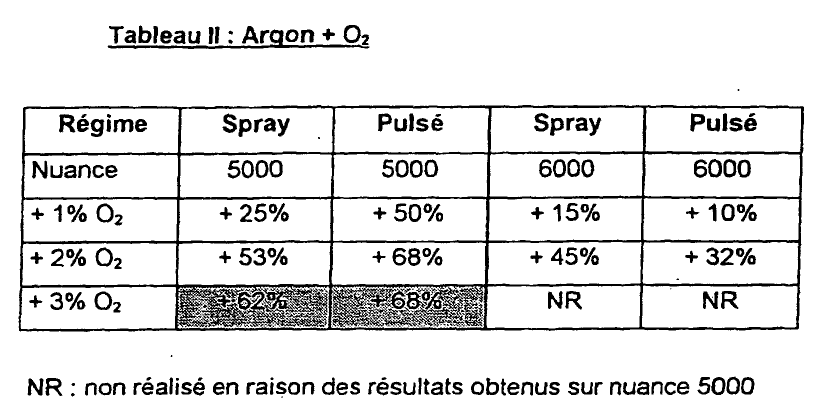

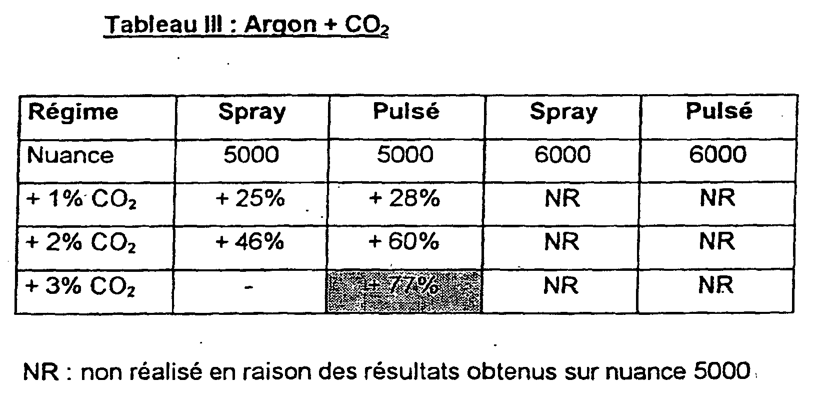

Il ressort clairement des tableaux II et III que si les additions de CO₂ sont à priori plus performantes en termes de vitesse de soudage, seules des additions de O₂ ne dépassant pas 2% permettent de garantir les propriétés mécaniques des différentes nuances de pièces d'aluminium.

Par ailleurs, afin d'évaluer les performances en qualité de joint (compacité et aspect du cordon), des examens radiographiques ont été effectués sur les pièces de nuance 5000, lesquels n'ont pas révélé d'indications différentes de celles habituellement rencontrées en MIG Argon ou mélanges Ar/He. Néanmoins, pour des additions de CO₂ de 3% et plus, l'aspect de surface fortement tourmenté est susceptible de masquer, en radiographie, d'éventuels défauts fins.

Donc, en complément, des prélèvements macrographiques ont permis de mettre en évidence, par simple polissage, des plages d'inclusions de taille réduite (de l'ordre de 0,01 mm), de répartition et d'orientations différentes. Toutefois, à % d'addition identique, ces plages sont beaucoup plus importantes en dimensions et densité sous CO₂ que sous O₂.

Ces plages ont été identifiées au MEB comme plages d'alumine (Al₂O₃). En outre, l'aspect des cordons obtenus avec les mélanges Ar/O₂ et Ar/CO₂, se différencie sensiblement de ceux réalisés sous argon pur. En effet, pour les deux types d'additions CO₂ ou O₂, les cordons offrent des aspects ternes, voire noirâtres suivant la teneur retenue. Généralement, les dépôts de surface obtenus à partir d'addition de CO2 sont plus prononcés et plus adhérents que ceux réalisés sous O₂ qui s'éliminent par simple brossage ou à l'aide d'un chiffon.

Ensuite, les performances mécaniques ont été évaluées à partir d'éprouvettes de traction travers arasées et de pliages travers prélevés sur assemblages.

Les résultats de traction sont donnés dans les tableaux IV et V suivants où ils sont exprimés en termes de coefficient de joint (résistance du Métal Fondu/Résistance Métal de base).

Il est à noter que les écarts de coefficients de joint entre les nuances 5000 et 6000 sont simplement dus à l'utilisation d'un métal de base de nuance 6000 livré à l'état T6, alors que l'assemblage n'a pas subi de traitement thermique après soudage.

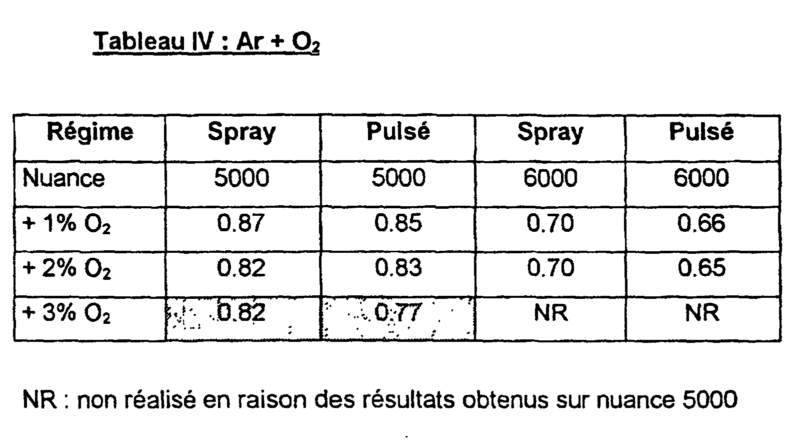

**Tableau V :**

| **Ar + CO**_{**2**} | | | | |
|---|---|---|---|---|
| **Régime** | **Spray** | **Pulsé** | **Spray** | **Pulsé** |
| Nuance | 5000 | 5000 | 6000 | 6000 |
| + 1% CO₂ | 0.82 | 0.83 | NR | NR |
| + 2% CO₂ | 0.80 | 0.83 | NR | NR |
| + 3% CO₂ | - | 0.79 | NR | NR |
| NR : non réalisé en raison des résultats obtenus sur nuance 5000 | | | | |

Les résultats obtenus ont mis en évidence, sur les faciès de rupture de ces éprouvettes, des plages de fines inclusions noires dispersées. Ces indications confirment les résultats des examens macrographiques. Au fur et à mesure de l'augmentation du pourcentage de O₂ ou de CO₂, elles deviennent de plus en plus importantes en dimensions et densité, et provoquent une perte de capacité à la déformation plus importante sur les essais de pliage, ainsi qu'une perte sensible des caractéristiques mécaniques.

Les résultats de ces derniers sont présentés comme acceptables (angle de pliage 180° sans défaut ou légers défauts) et inacceptables (angle de pliage < 180° avec fissure).

Toutefois, il faut souligner que les plages inclusionnaires (alumine) sont beaucoup plus nombreuses et denses avec les mélanges Ar+CO₂ qu'avec les mélanges Ar+O₂.

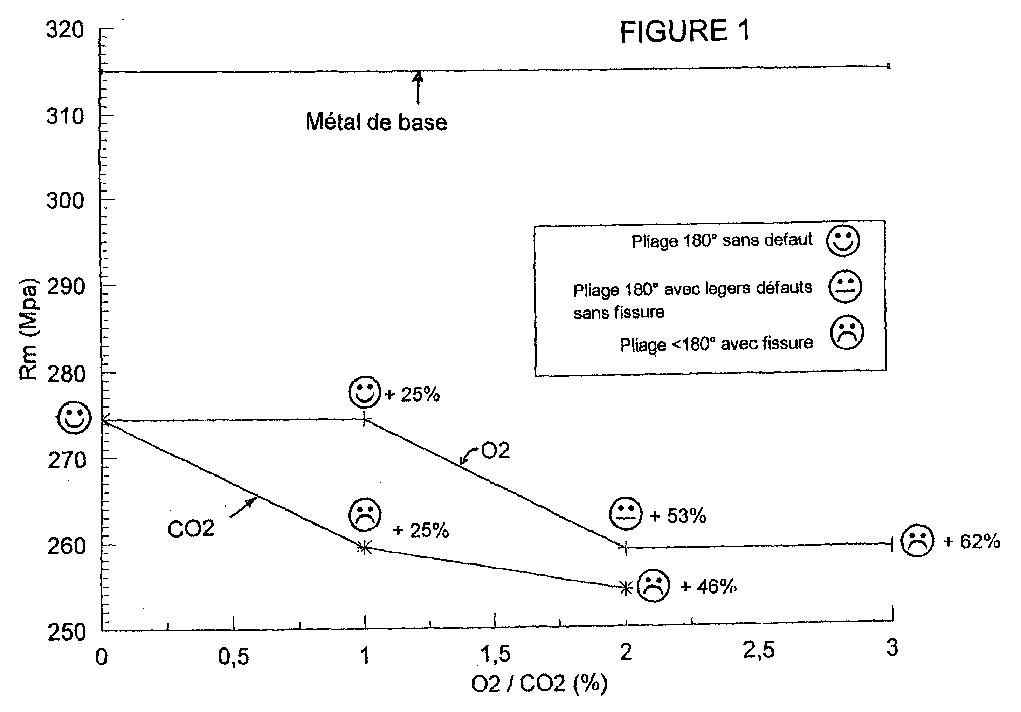

Les résultats sont schématisés sur les figures 1 à 4 annexées.

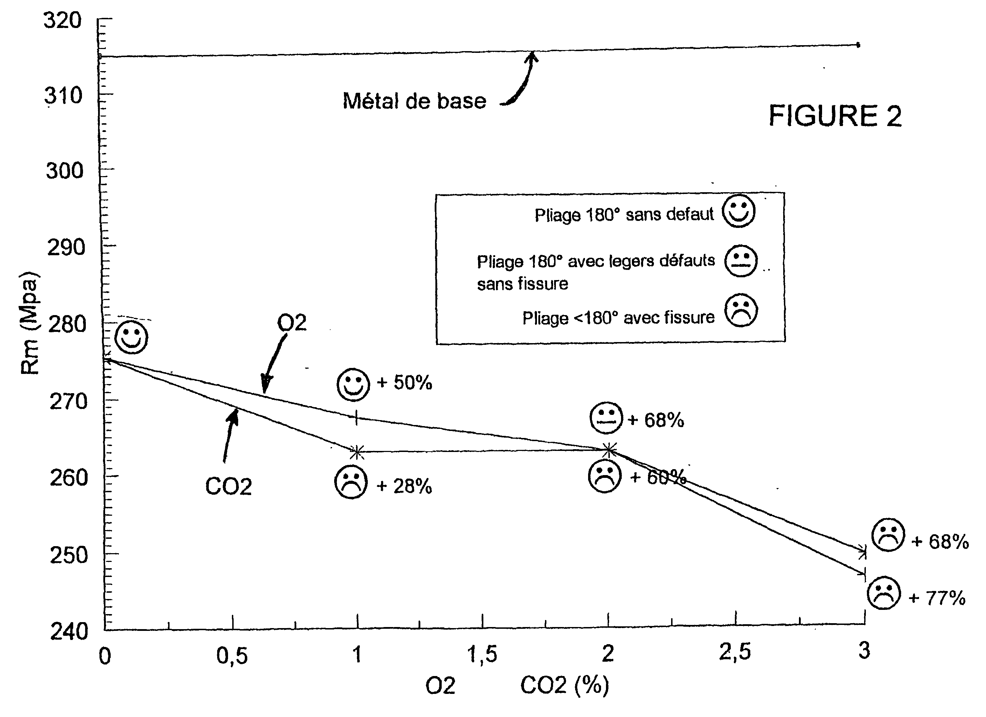

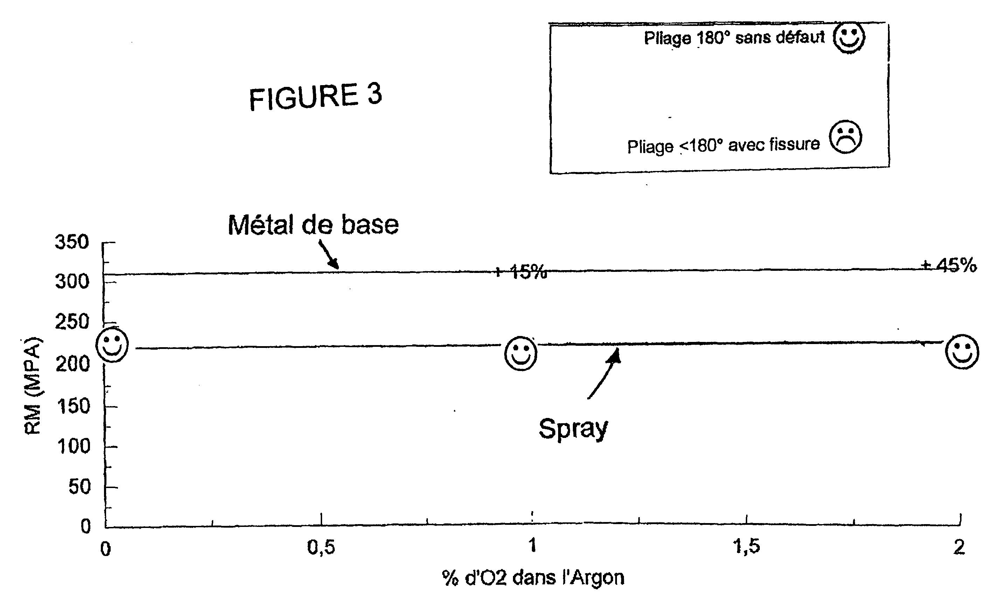

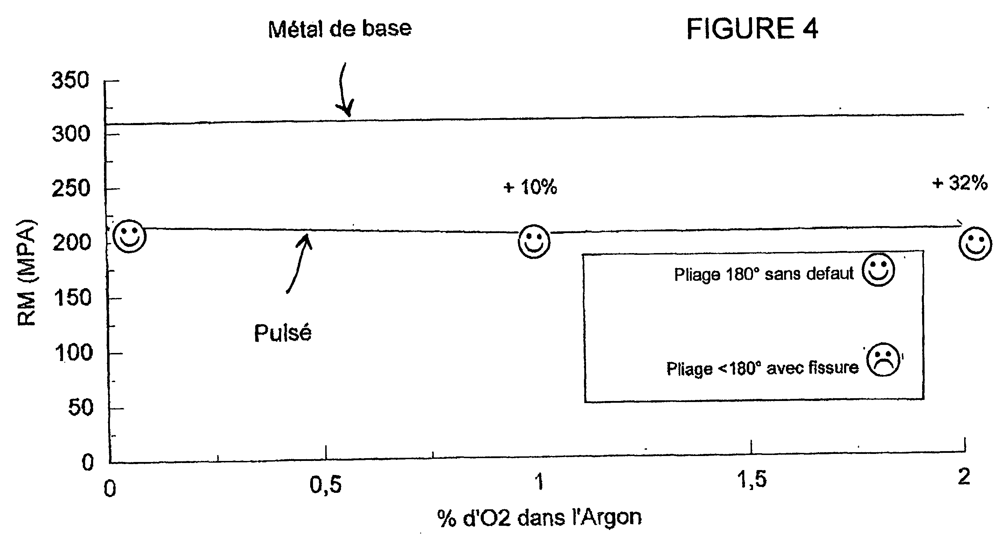

La figure 1 (alliage nuance 5000) et la figure 3 (alliage nuance 6000) représentent l'influence de addition de proportions croissantes de O₂ ou de CO₂ dans l'argon en soudage MIG à régime spray non modulé sur les performances de résistance au pliage et la résistance à la rupture sur éprouvette de traction ; alors que la figure 2 (alliage nuance 5000) et la figure 4 (alliage nuance 6000) représentent l'influence de l'addition de proportions croissantes de O₂ ou de CO₂ dans l'argon en soudage MIG à régime pulsé selon l'invention sur les performances de résistance au pliage et la résistance à la rupture sur éprouvette de traction.

Sur les figures 1 à 4, l'axe des abscisses représente les teneurs en O₂ ou CO₂ dans l'argon (en %) et l'axe des ordonnées représente les valeurs de résistance (Rm) à la traction (en MPa) des assemblages de nuance 5000 (Fig. 1 et 2) et 6000 (Fig. 3 et 4).

Les résultats sont considérés comme acceptables dès lors que le pliage à 180° est "sans défaut" ou "avec de légers défauts mais sans fissure" (voir légende des figures 1 à 4).

Pour les figures 3 et 4, on ne constate pas de dégradations des caractéristiques mécaniques de la zone fondue en fonction de la teneur en O₂ dans la mesure où les ruptures des éprouvettes de traction se produisent systématiquement en zone de liaison correspondant à un état T4 du matériau inférieur à l'état T6 de livraison non-affecté.

Ceci explique aussi les différences de coefficient de joint entre les séries 5000 et 6000.

En définitive, les meilleurs résultats sont obtenus lors de la mise en oeuvre de mélanges d'argon et d'oxygène contenant moins de 2% d'oxygène.

D'autres essais ont montré que les meilleurs résultats sont obtenus pour des teneurs en oxygène de 1,20% à 1,70%, préférentiellement de l'ordre de 1,50%.

## Revendications

1. Procédé de soudage MIG à régime pulsé, de l'aluminium et des alliages d'aluminium, avec mise en oeuvre d'une protection gazeuse d'au moins une partie de la zone de soudage, **caractérisé en ce que** la protection gazeuse est un mélange gazeux constitué de 1,20% à 1,70% d'oxygène et d'argon pour le reste, la vitesse de soudage est de 0.25 mlmin à 1.20 m/min et la vitesse de fil est de 2.5 m/min à 20 m/min.

2. Procédé selon la revendication 1, **caractérisé en ce que** le mélange gazeux de protection contient de 1,2 à 1,65% d'oxygène, le reste étant de l'argon.

3. Procédé selon la revendication 1 ou 2, **caractérisé en ce que** le mélange gazeux de protection contient de l'ordre de 1.5% d'oxygène, le reste étant de l'argon.

4. Procédé selon les revendications 1 à 3, **caractérisé en ce qu'**on met en oeuvre un fil fusible plein ou un fil fourré.

5. Procédé selon les revendications 1 à 4, **caractérisé en ce que** la vitesse de soudage est de 0-60 à 1 m/min.

6. Procédé selon les revendications 1 à 5, **caractérisé en ce que** la vitesse de fil est de 4 m/min à 13 m/min.

7. Procédé selon les revendications 1 à 6, **caractérisé en ce que** l'intensité moyenne de soudage est de 40 A à 450 A.

8. Procédé selon les revendications 1 à 7, **caractérisé en ce que** la tension moyenne de soudage est de 15 V à 40 V.

9. Procédé selon les revendications 1 à 8, **caractérisé en ce que** l'intensité de soudage est de 120 A à 350.

10. Procédé selon les revendications 1 à 9, **caractérisé en ce que** la tension moyenne de soudage est de 20 V à 28 V.

## Patentansprüche

1. Verfahren zum pulsförmigen MIG-Schweißen von Aluminium und Aluminium-Legierungen, unter Einsatz eines gasförmigen Schutzes mindestens eines Teils der Schweißzone, **dadurch gekennzeichnet, dass** der gasförmige Schutz ein gasförmiges Gemisch ist, das zu 1,20 % bis 1,70 % aus Sauerstoff und für den Rest aus Argon besteht, wobei die Schweißgeschwindigkeit 0,25 m/min bis 1,20 m/min und die Drahtgeschwindigkeit 2,5 m/min bis 20 m/min beträgt.

2. Verfahren nach Anspruch 1, **dadurch gekennzeichnet, dass** das gasförmige Schutzgemisch 1,2 bis 1,65 % Sauerstoff enthält, wobei der Rest Argon ist.

3. Verfahren nach Anspruch 1 oder 2, **dadurch gekennzeichnet, dass** das gasförmige Schutzgemisch etwa 1,5 % Sauerstoff enthält, wobei der Rest Argon ist.

4. Verfahren nach den Ansprüchen 1 bis 3, **dadurch gekennzeichnet, dass** ein massiver oder ein gefüllter Schmelzdraht eingesetzt wird.

5. Verfahren nach den Ansprüchen 1 bis 4, **dadurch gekennzeichnet, dass** die Schweißgeschwindigkeit 0,60 bis 1 m/min beträgt.

6. Verfahren nach den Ansprüchen 1 bis 5, **dadurch gekennzeichnet, dass** die Drahtgeschwindigkeit 4 m/min bis 13 m/min beträgt.

7. Verfahren nach den Ansprüchen 1 bis 6, **dadurch gekennzeichnet, dass** die durchschnittliche Schweißstärke 40 A bis 450 A beträgt.

8. Verfahren nach den Ansprüchen 1 bis 7, **dadurch gekennzeichnet, dass** die durchschnittliche Schweißspannung 15 V bis 40 V beträgt.

9. Verfahren nach den Ansprüchen 1 bis 8, **dadurch gekennzeichnet, dass** die Schweißstärke 120 bis 350 A beträgt.

10. Verfahren nach den Ansprüchen 1 bis 9, **dadurch gekennzeichnet, dass** die mittlere Schweißspannung 20 V bis 28 V beträgt.

## Claims

1. Process for the MIG welding of aluminium and aluminium alloys in pulsed mode, with the use of gas shielding of at least part of the welding zone, **characterized in that** the gas shield is a gas mixture consisting of 1.20% to 1.70% oxygen and of argon for the balance, the welding speed is from 0.25 m/minute to 1.20 m/minute and the wire feed rate is from 2.5 m/minute to 20 m/minute.

2. Process according to Claim 1, **characterized in that** the shielding gas mixture contains from 1.2 to 1.65% oxygen, the balance being argon.

3. Process according to Claim 1 or 2, **characterized in that** the shielding gas mixture contains about 1.5% oxygen, the balance being argon.

4. Process according to Claims 1 to 3, **characterized in that** a solid meltable wire or a flux-cored wire is used.

5. Process according to Claims 1 to 4, **characterized in that** the welding speed is from 0.60 to 1 m/minute.

6. Process according to Claims 1 to 5, **characterized in that** the wire feed rate is from 4 m/minute to 13 m/minute.

7. Process according to Claims 1 to 6, **characterized in that** the mean welding current is from 40 A to 450 A.

8. Process according to Claims 1 to 7, **characterized in that** the mean welding voltage is from 15 V to 40 V.

9. Process according to Claims 1 to 8, **characterized in that** the welding current is from 120 A to 350 A.

10. Process according to Claims 1 to 9, **characterized in that** the mean welding voltage is from 20 V to 28 V.
